# EUROPÄISCHE PATENTANMELDUNG

(11) **EP 4 582 239 A1**
(43) Veröffentlichungstag der Anmeldung: **09.07.2025**
(21) Anmeldenummer: 24219264.9
(22) Anmeldetag: 12.12.2024
(51) Int. Cl.: B29C 48/355, B29C 48/92

(54) **FÖRDERVORRICHTUNG**

(30) Priorität: 03.01.2024 DE 102024200031
(71) Anmelder: Continental Reifen Deutschland GmbH, 30175 Hannover (DE)
(72) Erfinder: Sharifi, Monir, 30175 Hannover (DE)
(74) Vertreter: Continental Corporation

(57) **Zusammenfassung**

Die Erfindung betrifft eine Fördervorrichtung (1) zum Fördern von aus einem Extruder (2) geförderten Extrudaten (3), wobei die Fördervorrichtung (1) eine Mehrzahl von Rollen (4) aufweist, wobei die Rollen (4) jeweils eine Förderoberflächen zum Fördern des Extrudates (3) aufweisen, wobei die Förderoberflächen mit voneinander unabhängigen Umfangsgeschwindigkeiten antreibbar sind,

## Beschreibung

Die Erfindung betrifft ein Fördervorrichtung zum Fördern von aus einem Extruder geförderten Extrudaten, wobei die Fördervorrichtung eine Mehrzahl von Rollen aufweist, wobei die Rollen jeweils eine Förderoberflächen zum Fördern des Extrudates aufweisen, wobei die Förderoberflächen mit voneinander unabhängigen Umfangsgeschwindigkeiten antreibbar sind. Weiterhin betrifft die Erfindung ein Verfahren zum Fördern von Extrudaten von einem Extruder zu einem Aufwickelm ittel.

Es sind Fördereinrichtungen zum Fördern von aus einem Extruder geförderten Extrudaten bekannt, die eine Vielzahl an Rollen zum Fördern des Extrudates von einem Extruder zu einem Aufwickelmittel aufweisen. Die Vielzahl an Rollen sind in Förderrichtung des Extrudates unmittelbar hintereinander angeordnet. Die Oberflächengeschwindigkeiten der Oberflächen der Rollen, die mit dem Extrudat in Kontakt treten und es befördern, verringert sich mit zunehmenden Abstand zum Extruder. Die Rollen können hierbei Fördergeschwindigkeiten haben, die in einem festgelegten Verhältnis zueinanderstehen. Eine beispielweise Ausführungsform hierfür ist ein Antriebsmotor für mehrere Rollen, die mittels eines Untersetzungsgetriebes miteinander verbunden sind. Alternativ können die Rollen aber auch zueinander unabhängige Fördergeschwindigkeiten aufweisen, indem beispielweise jede Rolle einen Antriebsmotor aufweist.

Die abnehmende Fördergeschwindigkeit des Extrudates mit wachsendem Abstand zum Extruder ermöglicht es dem Extrudat zu schrumpfen, bevor es auf dem Aufwickelmittel aufgewickelt wird und nicht mehr oder nicht mehr frei schrumpfen kann.

Es ist ein bekanntes Phänomen, dass Extrudate nach dem Extrudieren schrumpfen. Das Schrumpfverhalten ist hierbei von einer Vielzahl von Faktoren abhängig, wobei insbesondere die Materialzusammensetzung und die Verfahrensparameter sowie die Geometrien des Extruders relevant sind. Das sich einstellende Schrumpfverhalten ist daher nur eingeschränkt vorhersagbar und kann durch eine Anpassung von Verfahrensparametern während der Extrusion variieren.

Das Schrumpfverhalten ist hinsichtlich der Schrumpfgeschwindigkeit stark temperaturabhängig. Eine Schrumpfung, die bei beispielweise 120 °C innerhalb einzelner Minuten stattfindet, kann bei Raumtemperatur mehrere Tage dauern.

Wird ein nicht ausreichend geschrumpftes Extrudat aufgewickelt, hat es das Potenzial weiter zu schrumpfen. Da dies im aufgewickelten Zustand nicht möglich ist, entsteht eine Zugspannung, die dem Schrumpfen entgegenwirkt. Wird das Extrudat zu einem späteren Zeitpunkt abgewickelt setzt ein Schrumpfvorgang ein. Abgelängte Extrudate verändern entsprechend in nicht genau vorhersagbarer Weise über die Zeit ihre Länge.

Um möglichst maßhaltige abgelängte Extrudate zu erzeugen ist es also notwendig einen freien Schrumpfvorgang über eine ausreichend lange und möglichst konstante Dauer zu gewährleisten. Hierbei minimiert die freie Schrumpfdauer einen späteren Schrumpfvorgang und erhöht dadurch die Maßhaltigkeit des abgelängten Extrudates. Eine konstante freie Schrumpfdauer minimiert die Varianz eines späteren Schrumpfvorgangs und ermöglicht durch ein Offset beim Ablängen besonders maßhaltige abgelängte Extrudate.

Es hat sich gezeigt, dass bekannten Fördereinrichtungen trotz eines möglichen Schlupfes zwischen der Rolle und dem Extrudat nur eine grobe Annäherung an ein freies Schrumpfen ermöglichen, da durch die gewählte Fördergeschwindigkeit einer jeden Rolle aufgrund des nicht genau bekannten Schrumpfverhaltens Kräfte in Förderrichtung auf das Extrudat aufgebracht werden, die dem gewünschten freien Schrumpfen entgegenwirken.

Vor diesem Hintergrund liegt der Erfindung die Aufgabe zugrunde, eine Fördereinrichtungen zum Fördern von Extrudaten und ein Verfahren zum Fördern von Extrudaten derart auszuführen, dass ein möglichst freies Schrumpfen über eine ausreichend lange und möglichst konstante Dauer ermöglicht wird.

Diese Aufgabe wird gelöst mit einer Fördervorrichtung gemäß den Merkmalen des Patentanspruches 1 sowie einem Verfahren gemäß dem nebengeordneten Anspruch. Die Unteransprüche betreffen besonders zweckmäßige Weiterbildungen der Erfindung.

Erfindungsgemäß ist also eine Fördervorrichtung zum Fördern von aus einem Extruder geförderten Extrudaten vorgesehen, wobei die Fördervorrichtung eine Mehrzahl von Rollen aufweist. Die Rollen weisen jeweils eine Förderoberflächen zum Fördern des Extrudates auf, wobei die Förderoberflächen mit voneinander unabhängigen Umfangsgeschwindigkeiten antreibbar sind, wobei die Förderoberflächen der Rollen in Förderrichtung voneinander beabstandeten sind und zwischen den Förderoberflächen Zwischenräume ausbilden. Die Zwischenräume sind zur Aufnahme von Schlaufen des Extrudates eingerichtet, wobei die Zwischenräume über einen Sensor zur Ermittlung der Größe der Schlaufe des Extrudates verfügen.

Die Beabstandung der Förderoberflächen der Rollen zueinander ermöglicht die Ausbildung von Schlaufen des Extrudates zwischen den Rollen. Es wird ein freies Schrumpfen des durch das Extrudieren erwärmten Extrudates ermöglicht, so dass ein schneller und freier Schrumpfvorgang stattfinden kann.

Unter Beabstandung wird dabei verstanden, dass die Förderoberflächen zweier hintereinander angeordneter Rollen mehrere Zentimeter Abstand voneinander aufweisen. Der minimale Abstand ist zumindest größer als die zweifache Extrudatmaterialstärke, so dass das Extrudat zwischen den Rollen nach unten und zurück nach oben verlaufen kann und hierbei die Schlaufe ausbildet.

Ein freies Schrumpfen eines Extrudates ist gegeben, wenn während des Schrumpfens möglichst keine Kräfte auf das Extrudat wirken, insbesondere nicht entlang seiner Extrusionsrichtung oder Haupterstreckungsachse. Kräfte, wie vorliegend die Gewichtskraft des Extrudates über eine Länge von nicht mehr als einzelne Meter, also beispielweise 1 oder 2 Meter, können jedoch bei einem freien Schrumpfen in dem Extrudat vorliegen.

Durch die Sensoren wird eine Ermittlung der Schlaufenlängen ermöglicht, so dass die Fördergeschwindigkeit der Rollen derart angepasst werden können, dass eine möglichst konstante Schlaufenlänge und somit eine möglichst konstante freie Schrumpfdauer ermöglicht wird. Eine gleichmäßige sowie möglichst abschließende Schrumpfung des Extrudates wird erreicht.

Eine bevorzugte Ausführungsform sieht vor, dass die Rollen zumindest 2, bevorzugt zumindest 3, weiter bevorzugt zumindest 4, weiter bevorzugt zumindest 5 und weiter bevorzugt zumindest 6 Zwischenräume ausbilden. Das Ausbilden einer höheren Anzahl an Zwischenräumen ermöglicht eine längere freie Schrumpfdauer, wobei die Länge der einzelnen Schlaufen einem freien Schrumpfen nicht entgegensteht.

Eine weitere bevorzugte Ausführungsform sieht vor, dass die Förderoberflächen der Rollen in Förderrichtung zumindest um 15 cm, bevorzugt zumindest um 30 cm, weiter bevorzugt zumindest um 45 cm, weiter bevorzugt zumindest um 55 cm und weiter bevorzugt zumindest um 75 cm voneinander beabstandet sind. Durch einen größeren Abstand zwischen den Förderoberflächen der Rollen wird ein zweifaches Passieren des sich ergebenden Zwischenraums durch das Extrudat ermöglicht. Insbesondere bei biegesteiferen Extrudaten wird eine Beeinflussung des Extrudates vermieden sowie ein sicheres Verfahren sichergestellt.

Eine weitere bevorzugte Ausführungsform sieht vor, dass die Schlaufen unmittelbar am Extruder angeordnet sind, wobei die Schlaufen bevorzugt unmittelbar aneinander angeordnet sind. Eine unmittelbare Anordnung der Schlaufen am Extruder sowie unmittelbar aneinander ermöglichen eine kompakte und somit platzsparende Fördervorrichtung. Weiterhin kann das Extrudat nach dem Extrudieren unmittelbar frei Schrumpfen, so dass es bei einer möglichst hohen Temperatur und dadurch besonders schnell schrumpft.

Eine weitere bevorzugte Ausführungsform sieht vor, dass die Fördervorrichtung zumindest zwei Rollen aufweist, die koaxial zueinander angeordnet sind, wobei die Förderoberflächen der koaxial zueinander angeordnete Rollen mit voneinander unabhängigen Umfangsgeschwindigkeiten antreibbar sind, wobei bevorzugt jede Rolle zu einer weiteren Rolle koaxial angeordnet ist. Eine zeitgleiche Koextrusion zweier Extrudate parallel zueinander wird ermöglicht, wobei die Extrudate auch bei unterschiedlichem Schrumpfverhalten frei Schrumpfen können, da sie über zwei voneinander unabhängig angetriebene Rollen gefördert werden.

Eine weitere bevorzugte Ausführungsform sieht vor, dass die Fördereinrichtung Sensoren zur Ermittlung der Größe der Schlaufe des Extrudates an einem jeden Zwischenraum verfügt. Durch Sensoren an einem jeden Zwischenraum kann eine besonders genaue Regelung der Länge einer jeden Schlaufe durchgeführt werden, da Abschätzungen der Längen einzelner Schlaufenlängen entfallen können.

Eine weitere bevorzugte Ausführungsform sieht vor, dass die Sensoren an der Fördereinrichtung derart eingerichtet und beziehungsweise oder positioniert sind, dass die Schlaufenlängen in einem kleinen Toleranzbereich regelbar sind, insbesondere mit einer Toleranz kleiner als 15 %, bevorzugt kleiner als 10 %, weiter bevorzugt kleiner als 7 %, weiter bevorzugt kleiner als 5 % und am meisten bevorzugt kleiner als 3 %. Ein möglichst genaue Regelung der Schleifenlänge, beziehungsweise eine möglichst konstante Schlaufenlänge ermöglicht eine besonders gleichmäßige freie Schrumpfzeit.

Eine weitere bevorzugte Ausführungsform sieht vor, dass die Sensoren die Schlaufenlänge mittels mechanischem Kontakt oder kontaktlos ermitteln.

Erfindungsgemäß ist ein Verfahren zum Fördern von Extrudaten von einem Extruder zu einem Aufwickelmittel, bevorzugt mit einer erfindungsgemäßen Fördereinrichtung vorgesehen, mit den Schritten:
a) Antreiben von Rollen zum Fördern des Extrudates,
b) Messen von Ist-Längen von Schlaufen des Extrudates,
c) Vergleichen der Ist-Längen der Schlaufen des Extrudates mit Soll-Längen der Schlaufen,
d) Anpassen der Fördergeschwindigkeit der Rollen zum Annähern der Ist-Längen der Schlaufen an Soll-Längen der Schlaufen, zum Erzeugen konstanter Längen der Schlaufen.

Das Erzeugen von Schlaufen ermöglicht ein freies Schrumpfen des durch das Extrudieren erwärmten Extrudates, so dass ein schneller Schrumpfvorgang stattfinden kann.

Durch das Messen und Regeln von konstanten Schlaufenlängen wird eine möglichst konstante Schlaufenlänge und somit eine möglichst konstante freie Schrumpfdauer ermöglicht. Eine gleichmäßige sowie möglichst abschließende Schrumpfung des Extrudates wird erreicht. Unter einer konstanten Schrumpfdauer sind auch prozessbedingt geringe zeitliche Abweichungen vom Zielwert von beispielweise 15 % zu verstehen.

Eine bevorzugte Ausführungsform sieht vor, dass das Messen von Ist-Längen von Schlaufen taktil oder kontaktlos durchgeführt wird.

Eine weitere bevorzugte Ausführungsform sieht vor, dass das Fördern von dem Extruder mit einer Geschwindigkeit von zumindest 25 m/min, bevorzugt mit 45 m/min, weiter bevorzugt mit 55 m/min und am meisten bevorzugt mit zumindest 75 m/min durchgeführt wird.

Eine weitere bevorzugte Ausführungsform sieht vor, dass das Fördern von dem Extruder bis zum Aufwickelmittel zumindest 3 Minuten, bevorzugt zumindest 4 Minuten, weiter bevorzugt zumindest 5 Minuten und am meisten bevorzugt zumindest 7 Minuten dauert. Eine möglichst lange Dauer der freien Schrumpfung ermöglicht ein möglichst abschließendes Schrumpfen des Extrudates und führt zu besonders maßhaltigen abgelängten Extrudaten.

Eine weitere bevorzugte Ausführungsform sieht vor, dass die Abweichung der Förderdauer von einer Zielförderdauer kleiner 15 %, bevorzugt kleiner 10 %, weiter bevorzugt kleiner 7 %, weiter bevorzugt kleiner 5 % und am meisten bevorzugt kleiner 3 % beträgt.

Je kleiner die mögliche Abweichung der Förderdauer von der Zielförderdauer, je konstanter ist die Förderdauer und umso konstanter ist die freie Schrumpfung.

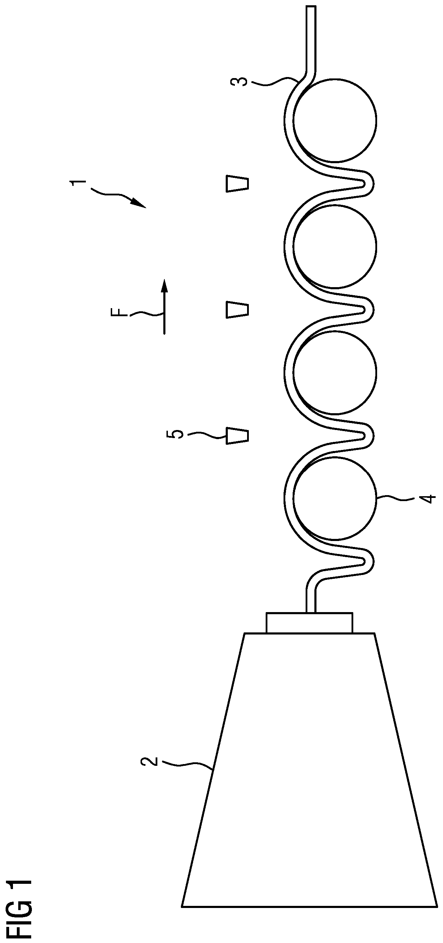

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
Fig. 1 eine Fördervorrichtung zum Fördern von aus einem Extruder geförderten Extrudaten.

Figur 1 zeigt eine Fördervorrichtung 1 zum Fördern von aus einem Extruder 2 geförderten Extrudaten 3. Die Fördervorrichtung 1 weist vier durch Elektromotoren mit voneinander unabhängigen Geschwindigkeiten beziehungsweise Drehzahlen antreibbare gleichartige Rollen 4 auf, wobei die Rollen 4 eine Förderoberflächen zum Fördern des Extrudates 3 aufweisen. Die Förderoberflächen der Rollen 4 sind in Förderrichtung F voneinander 12 cm beabstandet, so dass sich zwischen den Förderoberflächen drei Zwischenräume zur Aufnahme von Schlaufen des Extrudates 3 ausbilden. Eine weitere, in Förderrichtung F erste Schlaufe des Extrudates 3 bildet sich zwischen dem Extruder 2 und der in Förderrichtung F ersten Rolle 4 aus. Oberhalb der Zwischenräume sind Sensoren 5 in Form von Ultraschallsensoren zur Ermittlung der Größe beziehungsweise der Länge der Schlaufe des Extrudates 3 angeordnet. Die durch die Sensoren 5 ermittelten Messsignale werden mittels einer Recheneinheit verarbeitet. Die Recheneinheit erzeugt einen Vergleich zwischen den Ist-Längen der Schlaufen und der Soll-Längen der Schlaufen und passt die Drehzahl einer jeden Rolle 4 derart an, dass die Ist-Längen der Schlaufen an die Soll-Längen der Schlaufen angenähert werden.

### Bezugszeichenliste

- 1: Fördervorrichtung
- 2: Extruder
- 3: Extrudat
- 4: Rolle
- 5: Sensor

- F: Förderrichtung

## Patentansprüche

1. Fördervorrichtung (1) zum Fördern von aus einem Extruder (2) geförderten Extrudaten (3), wobei die Fördervorrichtung (1) eine Mehrzahl von Rollen (4) aufweist, wobei die Rollen (4) jeweils eine Förderoberflächen zum Fördern des Extrudates (3) aufweisen, wobei die Förderoberflächen mit voneinander unabhängigen Umfangsgeschwindigkeiten antreibbar sind, **dadurch gekennzeichnet, dass**
die Förderoberflächen der Rollen (4) in Förderrichtung (F) voneinander beabstandeten sind und zwischen den Förderoberflächen Zwischenräume ausbilden, wobei die Zwischenräume zur Aufnahme von Schlaufen des Extrudates (3) eingerichtet sind, wobei die Zwischenräume über einen Sensor (5) zur Ermittlung der Größe der Schlaufe des Extrudates (3) verfügen.

2. Fördervorrichtung (1) nach Anspruch 1, **dadurch gekennzeichnet, dass** die Rollen (4) zumindest 2, bevorzugt zumindest 3, weiter bevorzugt zumindest 4, weiter bevorzugt zumindest 5 und weiter bevorzugt zumindest 6 Zwischenräume ausbilden.

3. Fördervorrichtung (1) nach den Ansprüchen 1 oder 2, **dadurch gekennzeichnet, dass** die Förderoberflächen der Rollen (4) in Förderrichtung (F) zumindest um 15 cm, bevorzugt zumindest um 30 cm, weiter bevorzugt zumindest um 45 cm, weiter bevorzugt zumindest um 55 cm und weiter bevorzugt zumindest um 75 cm voneinander beabstandet sind.

4. Fördervorrichtung (1) nach einem der vorangehenden Ansprüche, **dadurch gekennzeichnet, dass**
die Schlaufen unmittelbar am Extruder (2) angeordnet sind, wobei die Schlaufen bevorzugt unmittelbar aneinander angeordnet sind.

5. Fördervorrichtung (1) nach einem der vorangehenden Ansprüche, **dadurch gekennzeichnet, dass**
die Fördervorrichtung (1) zumindest zwei Rollen (4) aufweist, die koaxial zueinander angeordnet sind, wobei die Förderoberflächen der koaxial zueinander angeordnete Rollen (4) mit voneinander unabhängigen Umfangsgeschwindigkeiten antreibbar sind, wobei bevorzugt jede Rolle (4) zu einer weiteren Rolle (4) koaxial angeordnet ist.

6. Fördervorrichtung (1) nach einem der vorangehenden Ansprüche, **dadurch gekennzeichnet, dass**
die Fördereinrichtung (1) Sensoren (5) zur Ermittlung der Größe der Schlaufe des Extrudates (3) an einem jeden Zwischenraum verfügt.

7. Fördervorrichtung (1) nach einem der vorangehenden Ansprüche, **dadurch gekennzeichnet, dass**
die Sensoren (5) an der Fördereinrichtung (1) derart eingerichtet und/oder positioniert sind, dass die Schlaufenlängen in einem kleinen Toleranzbereich regelbar sind, insbesondere mit einer Toleranz kleiner als 15 %, bevorzugt kleiner als 10 %, weiter bevorzugt kleiner als 7 %, weiter bevorzugt kleiner als 5 % und am meisten bevorzugt kleiner als 3 %.

8. Fördervorrichtung (1) nach einem der vorangehenden Ansprüche, **dadurch gekennzeichnet, dass** die Sensoren (5) die Schlaufenlänge mittels mechanischem Kontakt oder kontaktlos ermitteln.

9. Verfahren zum Fördern von Extrudaten (3) von einem Extruder (2) zu einem Aufwickelmittel, bevorzugt mit einer Fördereinrichtung (1) nach einem der vorhergehenden Ansprüche, mit den Schritten:
a) Antreiben von Rollen (4) zum Fördern des Extrudates (3),
b) Messen von Ist-Längen von Schlaufen des Extrudates (3),
c) Vergleichen der Ist-Längen der Schlaufen des Extrudates (3) mit Soll-Längen der Schlaufen,
d) Anpassen der Fördergeschwindigkeit der Rollen (4) zum Annähern der Ist-Längen der Schlaufen an Soll-Längen der Schlaufen, zum Erzeugen konstanter Längen der Schlaufen.

10. Verfahren nach Anspruch 9, **dadurch gekennzeichnet, dass** das Messen von Ist-Längen von Schlaufen taktil oder kontaktlos durchgeführt wird.

11. Verfahren nach einem der Ansprüche 9 oder 10, **dadurch gekennzeichnet, dass** das Fördern von dem Extruder mit einer Geschwindigkeit von zumindest 25 m/min, bevorzugt mit 45 m/min, weiter bevorzugt mit 55 m/min und am meisten bevorzugt mit zumindest 75 m/min durchgeführt wird.

12. Verfahren nach einem der Ansprüche 9 bis 11, **dadurch gekennzeichnet, dass** das Fördern von dem Extruder (2) bis zum Aufwickelmittel zumindest 3 Minuten, bevorzugt zumindest 4 Minuten, weiter bevorzugt zumindest 5 Minuten und am meisten bevorzugt zumindest 7 Minuten dauert.

13. Verfahren nach einem der Ansprüche 9 bis 12, **dadurch gekennzeichnet, dass** die Abweichung der Förderdauer von einer Zielförderdauer kleiner als 15 %, bevorzugt kleiner als 10 %, weiter bevorzugt kleiner als 7 %, weiter bevorzugt kleiner als 5 % und am meisten bevorzugt kleiner als 3 % beträgt.
